# EUROPÄISCHE PATENTSCHRIFT

(11) **EP 1 373 042 B1**
(45) Veröffentlichungstag und Bekanntmachung des Hinweises auf die Patenterteilung: **13.05.2009**
(21) Anmeldenummer: 02719890.2
(22) Anmeldetag: 21.02.2002
(51) Int. Cl.: B60T 13/74, B60T 13/66, B60T 17/22

(54) **ELEKTROHYDRAULISCHES BREMSSYSTEM UND VERFAHREN ZU DESSEN BETRIEB**
ELECTROHYDRAULIC BRAKE SYSTEM AND METHOD FOR OPERATING THE SAME
SYSTEME DE FREINAGE ELECTROHYDRAULIQUE ET PROCEDE PERMETTANT DE L'ACTIONNER

(30) Priorität: 22.02.2001 DE 10108589
(43) Veröffentlichungstag der Anmeldung: 02.01.2004
(73) Patentinhaber: Ford Global Technologies, LLC, Dearborn, MI 48126 (US)
(72) Erfinder: TRUTSCHEL, Ralf, 98693 Ilmenau (DE); AUGSBURG, Klaus, 99310 Arnstadt (DE)
(74) Vertreter: Drömer, Hans-Carsten
(86) Internationale Anmeldenummer: PCT/EP2002/001834
(87) Internationale Veröffentlichungsnummer: WO 2002/074597

(56) Entgegenhaltungen:
- WO-A-00/30909
- WO-A-00/68053

## Beschreibung

Die Erfindung betrifft ein elektrohydraulisches Bremssystem, enthaltend einen mit einem Bremspedal gekoppelten Pedalzylinder; einen mit Bremseinrichtungen gekoppelten Bremszylinder sowie mindestens ein Ventil, welches in einem Sicherheitsmodus einen Hydraulikpfad mit einer direkten Verbindung zwischen Pedalzylinder und Bremszylinder herstellen kann. Ferner betrifft die Erfindung ein Verfahren zum Betrieb eines derartigen Bremssystems.

Elektrohydraulische Bremssysteme sind z.B. aus der WO 00/68053 bekannt. Sie besitzen ein Hochdruckreservoir und ein Niederdruckreservoir für eine Hydraulikflüssigkeit sowie elektromagnetische Ventile ("Servoventile"), über deren Betätigung die genannten Reservoire nach Wahl mit einem Bremszylinder zur Erzeugung eines Bremsdruckes in den Bremseinrichtungen (Scheibenbremsen, Trommelbremsen od. dgl.) gekoppelt werden können. Die Bremskraft kann somit unabhängig von der Pedalstellung des Bremspedals eingestellt werden und muss nicht durch die Körperkraft des Fahrers erzeugt werden. Um dem Fahrer jedoch ein gewohntes Rückkopplungsgefühl bei der Betätigung des Bremspedals zu geben, sind Systeme mit einer elektrohydraulischen Pedalwegaktuierung entwickelt worden. Bei diesen ist das Bremspedal an einen Pedalzylinder gekoppelt, welcher ein- oder zweiseitig ausgeführt sein kann und dessen Arbeitsvolumen bzw. Arbeitsvolumina über ein weiteres elektromagnetisches Ventil von einer Steuerung wahlweise mit einem Hochdruckreservoir und einem Niederdruckreservoir gekoppelt werden kann bzw. können.

Des Weiteren ist es bekannt, elektrohydraulische Bremssysteme mit einem Sicherheitssystem auszustatten, welches bei einer Störung - wie insbesondere einem Ausfall des Druckes im Hochdruckreservoir - eine Betätigung der Bremse erlaubt. Zu diesem Zweck wird durch eine geeignete Schaltung von elektromagnetischen Ventilen dafür gesorgt, dass ein Hydraulikpfad enthaltend zwei korrespondierende Arbeitsvolumina von Pedalzylinder und Bremszylinder hergestellt wird, so dass eine unmittelbare hydraulische Wirkverbindung zwischen dem Bremspedal und den Bremseinrichtungen entsteht. Problematisch bei diesen Systemen ist jedoch, dass der Wechsel in den Sicherheitsmodus zu einem Zeitpunkt stattfinden kann, zu dem die Kolben im Pedalzylinder und Bremszylinder in nicht korrespondierenden Positionen stehen, so dass sich für einen normalen hydraulischen Betrieb zu wenig oder zu viel Hydraulikflüssigkeit im Hydraulikpfad befindet. Wenn sich zum Beispiel zuviel Hydraulikflüssigkeit im Hydraulikpfad befindet, kann der Bremszylinderkolben seine Nullstellung nicht einnehmen. Damit garantiert das Sicherheitssystem zwar jederzeit ein Abbremsen, nicht jedoch das Lösen der Bremsen.

Vor diesem Hintergrund war es Aufgabe der vorliegenden Erfindung, ein elektrohydraulisches Bremssystem sowie ein Verfahren zu dessen Betrieb bereitzustellen, welches im Sicherheitsmodus jeweils einen möglichst breiten Funktionsbereich des Bremssystems gewährleistet.

Diese Aufgabe wird durch ein Bremssystem mit den Merkmalen des Anspruchs 1 sowie durch ein Verfahren mit den Merkmalen des Anspruchs 7 gelöst. Vorteilhafte Ausgestaltungen sind in den Unteransprüchen enthalten.

Das erfindungsgemäße elektrohydraulische Bremssystem enthält einen mit einem Bremspedal gekoppelten "Pedalzylinder" sowie einen mit Bremseinrichtungen gekoppelten "Bremszylinder". Ferner enthält es mindestens ein vorzugsweise elektrisch betätigtes Ventil, welches derart betätigt werden kann, dass es in einem Sicherheitsmodus einen Hydraulikpfad mit einer direkten hydraulischen Verbindung zwischen Pedalzylinder und Bremszylinder herstellen kann. Zu dem Hydraulikpfad werden dabei definitionsgemäß die Verbindungsleitung und die gekoppelten Arbeitsvolumina von Pedalzylinder und Bremszylinder gerechnet. Im Hydraulikpfad kann insbesondere das bei einer Betätigung des Bremspedals komprimierte Arbeitsvolumen des Pedalzylinders mit dem bei einem Anziehen der Bremse expandierenden Arbeitsvolumen des Bremszylinders gekoppelt werden. Das Bremssystem ist dadurch gekennzeichnet, dass es eine Ausgleichseinrichtung aufweist, mit welcher im Sicherheitsmodus ein definiertes Volumen an Hydraulikflüssigkeit im Hydraulikpfad hergestellt werden kann.

Die Gewährleistung eines definierten Volumens an Hydraulikflüssigkeit durch die Ausgleichseinrichtung stellt sicher, dass eine zuverlässige Funktion mit einem breiten Arbeitsbereich bei der direkten hydraulischen Kopplung zwischen Bremspedal und Bremseinrichtungen erzielt wird. Insbesondere kann es nicht zu einer permanenten Blockierung der Bremsen durch einen Überschuss an Hydraulikflüssigkeit kommen.

Gemäß einer bevorzugten Ausgestaltung des Bremssystems weist dieses einen Zusatzzylinder mit einem federbelasteten Kolben auf, wobei dasjenige Arbeitsvolumen des Zusatzzylinders, welches unter Wirkung der Feder expandiert, über ein vorzugsweise elektrisch betätigtes Ventil mit dem Hydraulikpfad gekoppelt werden kann. Eine derartige Kopplung kann insbesondere beim Übergang in den Sicherheitsmodus geschehen, woraufhin das sich unter der Wirkung der Feder expandierende Arbeitsvolumen des Zusatzzylinders überschüssige Hydraulikflüssigkeit aus dem Hydraulikpfad abführen kann. Von Vorteil ist dabei, dass dieser Entzug von Hydraulikflüssigkeit durch die Expansion einer Feder bewirkt wird und somit unabhängig vom Hydraulikdruck ist, welcher bei einem Übergang in den Sicherheitsmodus abgefallen sein kann.

Gemäß einer Weiterentwicklung der vorstehend genannten Ausgestaltung ist das unter der Wirkung der Feder komprimierte Arbeitsvolumen des Zusatzzylinders über ein vorzugsweise elektrisch betätigtes Ventil an ein Hochdruckreservoir koppelbar. Diese Kopplung kann dabei insbesondere außerhalb des Sicherheitsmodus hergestellt werden, so dass dann im genannten Arbeitsvolumen Hochdruck herrscht, der zu einer Verschiebung des Kolbens des Zusatzzylinders unter Kompression der Feder führt. Auf diese Weise wird sichergestellt, dass bei einem eventuellen Übergang in den Sicherheitsmodus die Feder sich im komprimierten Zustand befindet und daher für die gewünschte Ausdehnung des federseitigen Volumens sorgen kann.

Bei einer bevorzugten Ausgestaltung des Bremssystems ist der Hydraulikpfad über ein Rückschlagventil an ein Niederdruckreservoir mit Hydraulikflüssigkeit gekoppelt. Auf diese Weise kann erreicht werden, dass sich nicht weniger als eine vorgegebene Menge an Hydraulikflüssigkeit im Hydraulikpfad befindet. Sollte dies nämlich anfänglich der Fall sein, so wird hierdurch irgendwann eine Situation erzeugt, bei der im Hydraulikpfad ein geringerer Druck als im Niederdruckreservoir herrscht. In diesem Moment öffnet jedoch das Rückschlagventil und sorgt dadurch für einen Zustrom an Hydraulikflüssigkeit im erforderlichen Ausmaß.

Weiterhin kann das Bremssystem ein Niederdruckreservoir für Hydraulikflüssigkeit enthalten, an welches im Sicherheitsmodus die jeweils zweiten Seiten von einem zweiseitigen Pedalzylinder, einem zweiseitigen Bremszylinder und/oder einem zweiseitigen Zusatzzylinder gekoppelt sind. Eine derartige Kopplung sorgt für definierte Kräfteverhältnisse und einen systemweiten Volumenausgleich der Hydraulikflüssigkeit.

Ferner können der Pedalzylinder und/oder der Bremszylinder mit einem (weiteren) vorzugsweise elektrisch betätigten Ventil gekoppelt sein, über welches die Zylinderarbeitsvolumina außerhalb des Sicherheitsmodus wahlweise mit einem Niederdruckreservoir oder einem Hochdruckreservoir verbunden werden können. Auf diese Weise lässt sich die Kolbenstellung und Kolbenbewegung der Zylinder elektrisch in gewünschter Weise steuern.

Die Erfindung betrifft ferner ein Verfahren zum Betrieb eines elektrohydraulischen Bremssystems, wobei das Bremssystem insbesondere in der vorstehend erläuterten Weise ausgestaltet sein kann. Das Bremssystem enthält einen mit einem Bremspedal gekoppelten Pedalzylinder sowie einen mit Bremseinrichtungen gekoppelten Bremszylinder, wobei beim Übergang in einen Sicherheitsmodus ein Hydraulikpfad mit einer direkten Verbindung zwischen Pedalzylinder und Bremszylinder hergestellt wird. Das Verfahren ist dadurch gekennzeichnet, dass im Sicherheitsmodus ein definiertes Volumen an Hydraulikflüssigkeit im Hydraulikpfad von Pedalzylinder und Bremszylinder hergestellt wird. Auf diese Weise wird erreicht, dass das Bremssystem auch im Sicherheitsmodus einen möglichst breiten Arbeitsbereich hat.

Insbesondere kann bei dem Verfahren beim Übergang in den Sicherheitsmodus so lange Hydraulikflüssigkeit aus dem Bremszylinder abgesaugt werden, bis dessen Kolben seine Ruhestellung erreicht hat. Diese Ruhestellung des Kolbens stellt einen definierten Zustand dar, welcher bei einem vollständigen Lösen der Bremseinrichtungen einzunehmen ist.

Ferner kann dem Hydraulikpfad Hydraulikflüssigkeit zugeführt werden, wenn im Hydraulikpfad ein vorgegebener Druck unterschritten wird. Dies schafft einen Volumenausgleich, falls zu Beginn des Sicherheitsmodus durch die zufällig vorliegende Stellung der Kolben von Pedalzylinder und Bremszylinder zu wenig Hydraulikflüssigkeit im Hydraulikpfad vorhanden sein sollte.

Weiterhin ist es bevorzugt, wenn der Pedalzylinder und/oder der Bremszylinder außerhalb des Sicherheitsmodus über vorzugsweise elektrisch betätigte Ventile gesteuert mit Hochdruck beziehungsweise Niederdruck beaufschlagt werden. Auf diese Weise lassen sich Servofunktionen des Bremssystems erzeugen.

Im Folgenden wird die Erfindung mit Hilfe der Figuren beispielhaft näher erläutert. Es zeigen:
- Fig. 1: ein erfindungsgemäßes Bremssystem, und
- Fig. 2a-d: verschiedene Anfangszustände von Pedalzylinder und Bremszylinder beim Übergang in einen Sicherheits- modus.

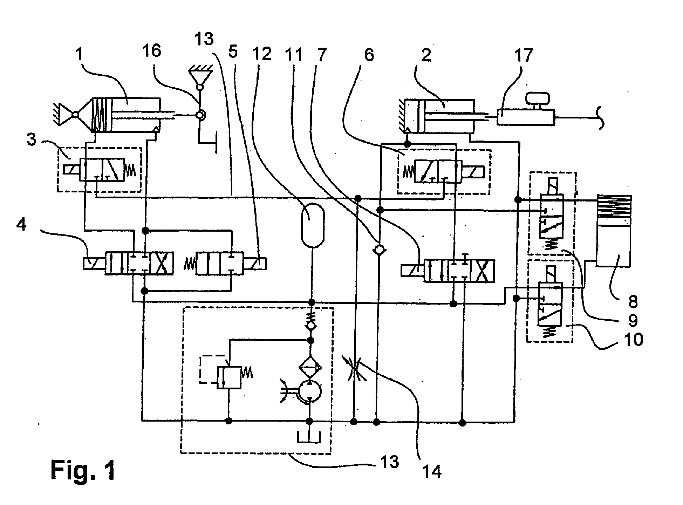

Figur 1 zeigt schematisch den Schaltplan eines erfindungsgemäßen elektrohydraulischen Bremssystems, wobei die dargestellte Stellung der Ventile dem Normalbetrieb im "geregelten Modus" entspricht. Das Bremssystem enthält einen Pedalzylinder 1, dessen Kolben mit einem Bremspedal 16 gekoppelt ist. Auf den Kolben wirkt eine Federkraft, welche diesen in eine Ruhestellung (unbetätigtes Bremspedal) drängt. Der Pedalzylinder 1 ist als doppelt wirkender Zylinder ausgeführt, dessen beide reziproken Arbeitsvolumina über ein zugehöriges elektromagnetisches Servo- oder Proportionalventil 4 entsprechend den Vorgaben einer Steuerung (nicht dargestellt) wahlweise mit einem Hochdruckreservoir 12 beziehungsweise einem Niederdruckreservoir 13 für Hydraulikflüssigkeit gekoppelt werden können. Auf diese Weise lässt sich durch Ansteuerung des Servoventils 4 selektiv eine Kraft auf den Kolben des Pedalzylinders 1 und damit auf das Bremspedal 16 ausüben.

Des Weiteren enthält das Bremssystem einen Bremszylinder 2, welcher mit einer Bremseinrichtung 17 zur Erzeugung einer Bremskraft an den Rädern gekoppelt ist. Auch der Bremszylinder 2 ist im dargestellten Beispiel doppelt wirkend mit zwei reziproken Arbeitsvolumina ausgebildet, wobei das eine Arbeitsvolumen über ein Servoventil 7 gemäß den Vorgaben einer Steuerung wahlweise mit dem Hochdruckreservoir 12 oder dem Niederdruckreservoir 13 verbunden werden kann. Das andere Arbeitsvolumen des Bremszylinders 2 ist im dargestellten Beispiel direkt an das Niederdruckreservoir 13 angeschlossen.

Mit einem Bremssystem des vorstehend beschriebenen Aufbaus lässt sich ein normaler elektrohydraulischer Bremsbetrieb realisieren, bei dem über den Pedalzylinder 1 eine elektrohydraulische Pedalwegaktuierung und über den Bremszylinder 2 eine elektrohydraulische Bremsbetätigung erfolgen kann.

Um auch in einem Störfall wie zum Beispiel bei einem Ausfall des Hochdruckreservoirs 12 eine Betätigung der Bremsen sicherzustellen, kann das in Figur 1 dargestellte Bremssystem in einen sogenannten Sicherheitsmodus überführt werden. In diesem Sicherheitsmodus sind die Elektroventile 3, 5 und 6 in den jeweils anderen (nicht dargestellten) Zustand überführt, so dass die Servoventile 4 und 7 vom Pedalzylinder 1 bzw. Bremszylinder 2 abgekoppelt sind. Im Sicherheitsmodus wird über ein erstes Elektro- bzw. Magnetventil 3 und ein zweites Elektroventil 6 eine direkte Verbindung zwischen den kolbenstangenabgewandten Seiten von Pedalzylinder 1 und Bremszylinder 2 hergestellt. Die Verbindung zwischen den betreffenden Arbeitsvolumina der Zylinder 1 und 2 einschließlich dieser Volumina selbst wird nachfolgend als "Hydraulikpfad 13" bezeichnet.

Die kolbenstangenzugewandte Seite des Pedalzylinders 1 wird im Sicherheitsmodus über die Umstellung eines dritten Elektroventils 5 direkt mit dem Niederdruckreservoir 13 gekoppelt, mit welchem auch die kolbenstangenzugewandte Seite des Bremszylinders 2 gekoppelt ist. Zwischen den beiden Zylindern 1 und 2 muss sich mindestens eine Baugruppe befinden, die den Volumenstrom zwischen den beiden Zylindern drosselt.

Durch den vorstehend beschriebenen Hydraulikpfad 13 zwischen Pedalzylinder 1 und Bremszylinder 2 wird eine unmittelbare hydraulische Kopplung beider Zylinder hergestellt, so dass die Bremseinrichtung 17 durch einen Druck auf das Bremspedal 16 betätigt werden kann.

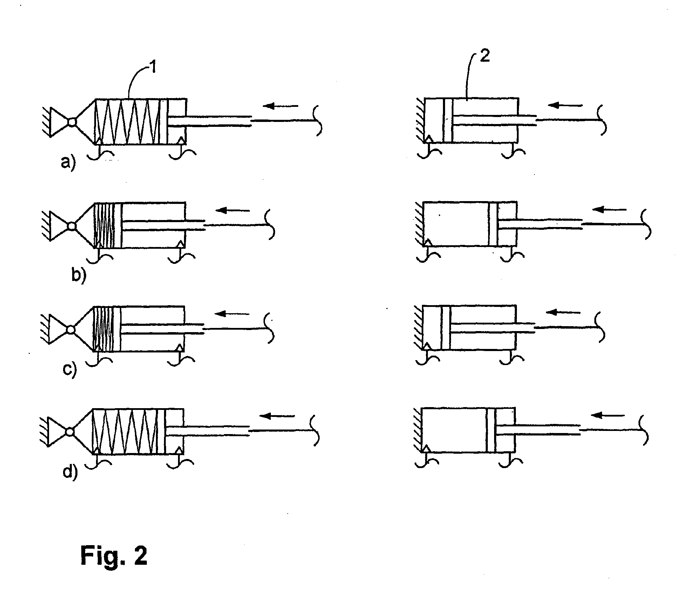

Da im geregelten Modus der Pedalzylinder 1 und der Bremszylinder 2 unabhängig voneinander arbeiten, können ihre Kolben beim Übergang in den Sicherheitsmodus (Umschalten der Ventile 3, 5, 6) sich in verschiedenen Stellungen befinden. Die wichtigsten möglichen Fälle sind in den Figuren 2a-2d dargestellt. In Figur 2a befindet sich der Kolben des Pedalzylinders 1 ebenso wie der Kolben des Bremszylinders 2 in der jeweiligen Ruhestellung (keine Betätigung der Bremse). In Figur 2b ist der Kolben des Pedalzylinders 1 dagegen ebenso wie derjenige des Bremszylinders 2 am jeweiligen Anschlag (maximale Betätigung der Bremse). Beide Figuren 2a, 2b zeigen somit ein hydraulisch ausgeglichenes System für den Zustand der Ent- beziehungsweise Belastung.

Bei Figur 2c befindet sich der Kolben des Pedalzylinders 1 an seinem Anschlag (Bremspedal gedrückt) und der Kolben des Bremszylinders 2 in seiner Ruhestellung (Bremseinrichtung lose). Findet in einem solchen Falle der Übergang in den Sicherheitsmodus statt, so befindet sich zu wenig Hydraulikflüssigkeit im Hydraulikpfad 13.

Figur 2d zeigt das andere Extrem, bei dem der Kolben des Pedalzylinders 1 in seiner Ruhestellung (Bremspedal losgelassen) und der Kolben des Bremszylinders 2 in seiner Anschlagstellung (Bremseinrichtungen angezogen) ist, so dass sich beim Übergang in den Sicherheitsmodus ein Überschuss an Hydraulikflüssigkeit im Hydraulikpfad befindet.

Die in den Figuren 2c und 2d dargestellten Fälle begrenzen die Funktion des Bremssystems im Sicherheitsmodus, da bei einem Mangel an Hydraulikflüssigkeit eine ausreichende Betätigung der Bremsen nicht mehr gewährleistet ist und bei einem Überschuss an Hydraulikflüssigkeit die Bremsen nicht mehr ordnungsgemäß gelöst werden können.

Um die geschilderten Probleme zu vermeiden, wird erfindungsgemäß eine Ausgleichseinrichtung vorgeschlagen, mit welcher sich das Volumen der Hydraulikflüssigkeit im Hydraulikpfad 13 zu Beginn des Sicherheitsmodus auf ein gewünschtes Maß einstellen lässt. Um dies zu erreichen, enthält das System einen doppelt wirkenden Zusatzzylinder 8 (vgl. Figur 1), dessen Kolben durch eine Feder vorgespannt ist. Der Ausgleich desjenigen Arbeitsvolumens, welches unter Wirkung der Feder zur Expansion tendiert ("Federraum"), wird über ein Elektroventil 9 so beschaltet, dass er im geregelten Modus (Figur 1) mit dem Niederdruckreservoir 13 und im Sicherheitsmodus (in Figur 1 nicht dargestellte Stellung des Ventils 9) mit dem Hydraulikpfad 13 an einer Stelle zwischen Drossel und Bremszylinder 2 verbunden wird. Der Anschluss des komplementären Arbeitsvolumens des Zusatzzylinders 8 wird über ein zweites Elektroventil 10 so beschaltet, dass dieser im geregelten Modus (Figur 1) mit dem Hochdruckreservoir 12 und im Sicherheitsmodus (in Figur 1 nicht dargestellte Stellung des Ventils 10) mit dem Niederdruckreservoir 13 verbunden ist.

Aufgrund der vorstehend beschriebenen Beschaltung des Zusatzzylinders 8 wird im geregelten Modus ein Druckgefälle vom federabgewandten Arbeitsvolumen zum Federraum hergestellt, so dass sich der Kolben des Zusatzzylinders 8 in diese Richtung bis zu seinem Anschlag bewegt und dort während des geregelten Modus verharrt. Die Feder wird auf diese Weise vorgespannt.

Wird vom geregelten Modus in den Sicherheitsmodus gewechselt, so ändert durch die Umstellung der Elektroventile 9 und 10 die Druckdifferenz im Zusatzzylinder 8 die Richtung. Aufgrund der Wirkung der Feder im Zusatzzylinder 8 kommt es dabei zu einer Expansion des Federraumes. Befindet sich beim Übergang in den Sicherheitsmodus - ähnlich wie in Figur 2d - der Kolben des Bremszylinders 2 nicht in seiner Ruhestellung, so wird das von ihm verdrängte Volumen in den Federraum des Zusatzzylinders 8 abfließen, bis der Kolben des Bremszylinders 2 seine Nullstellung oder Ruhestellung eingenommen hat. Überschüssiges Hydraulikvolumen wird auf diese Weise abgeführt.

Das Bremssystem enthält weiterhin ein Rückschlagventil 11, welches den Hydraulikpfad 13 an einer Stelle zwischen Drossel und Bremszylinder 2 mit dem Niederdruckreservoir 13 verbindet, wobei die Durchflussrichtung des Rückschlagventils 11 vom Niederdruckreservoir 13 zum Hydraulikpfad 13 verläuft. Das Rückschlagventil 11 öffnet sich, wenn der Kolben des Bremszylinders 2 seine Ruhestellung erreicht hat, der Kolben des Zusatzzylinders 8 jedoch noch nicht an seinem Anschlag ist. Durch die Öffnung des Rückschlagventils 11 kann dann der Federraum des Zusatzzylinders 8 mit Hydraulikflüssigkeit gefüllt werden, bis der Kolben seinen Anschlag erreicht. Das auf der federabgewandten Seite verdrängte Volumen des Zusatzzylinders 8 fließt dabei in das Niederdruckreservoir 13 ab.

Befindet sich zu diesem Zeitpunkt der Kolben des Pedalzylinders 1 nicht an seinem Anschlag der Ruhestellung (vgl. Figur 2c), so wird bei der ersten Entlastung das Rückschlagventil 11 öffnen und so lange offen bleiben, bis auch der Kolben des Pedalzylinders 1 seine Nullstellung oder Ruhestellung erreicht hat. Das Bremssystem ist dann volumetrisch ausgeglichen.

Im Falle einer Störung wird bei dem erfindungsgemäßen Bremssystem somit durch Umstellung der Elektroventile 3, 5 und 6 in einen Sicherheitsmodus übergegangen, in welchem der Pedalzylinder 1 und der Bremszylinder 2 direkt hydraulisch gekoppelt sind. Um dabei ein definiertes Volumen an Hydraulikflüssigkeit im Hydraulikpfad sicherzustellen, wird der Zusatzzylinder 8 vorgesehen, dessen federbelastete, im Sicherheitsmodus expandierende Seite überschüssige Hydraulikflüssigkeit aus dem Bremszylinder 2 abführen kann. Darüber hinaus kann über ein Rückschlagventil 11 Hydraulikflüssigkeit aus dem Niederdruckreservoir 13 entnommen werden.

## Patentansprüche

1. Elektrohydraulisches Bremssystem, enthaltend
a) einen mit einem Bremspedal(16) gekoppelten Pedalzylinder (1),
b) einen mit Bremseinrichtungen (17) gekoppelten Bremszylinder (2),
c) mindestens ein vorzugsweise elektrisch betätigtes Ventil (3, 6), welches in einem Sicherheitsmodus einen Hydraulikpfad (13) mit einer direkten Verbindung zwischen Pedalzylinder (1) und Bremszylinder (2) herstellen kann,
**dadurch gekennzeichnet, dass** das Bremssystem eine Ausgleichseinrichtung (8, 9, 10, 11) aufweist, mit welcher im Sicherheitsmodus ein definiertes Volumen an Hydraulikflüssigkeit im Hydraulikpfad (13) hergestellt werden kann.

2. Elektrohydraulisches Bremssystem nach Anspruch 1, **dadurch gekennzeichnet, dass** die Ausgleichseinrichtung einen Zusatzzylinder (8) mit einem federbelasteten Kolben enthält, wobei das unter Federwirkung expandierende Arbeitsvolumen des Zylinders über ein vorzugsweise elektrisch betätigtes Ventil (9) im Sicherheitsmodus mit dem Hydraulikpfad (13) gekoppelt werden kann.

3. Bremssystem nach Anspruch 2, **dadurch gekennzeichnet, dass** das unter Federwirkung komprimierte Arbeitsvolumen des Zusatzzylinders (8) über ein vorzugsweise elektrisch betätigtes Ventil (10) außerhalb des Sicherheitsmodus an ein Hochdruckreservoir (12) gekoppelt werden kann.

4. Bremssystem nach einem der Ansprüche 1 bis 3, **dadurch gekennzeichnet, dass** der Hydraulikpfad (13) über ein Rückschlagventil (11) an ein Niederdruckreservoir (13) gekoppelt ist.

5. Bremssystem nach einem der Ansprüche 1 bis 4, **dadurch gekennzeichnet, dass** dieses ein Niederdruckreservoir (13) aufweist, an welches im Sicherheitsmodus die jeweils zweiten Seiten von Pedalzylinder (1), Bremszylinder (2) und/oder Zusatzzylinder (8) gekoppelt sind.

6. Bremssystem nach einem der Ansprüche 1 bis 5, **dadurch gekennzeichnet, dass** der Pedalzylinder (1) und/oder der Bremszylinder (2) mit einem vorzugsweise elektrisch betätigten Ventil (4, 7) gekoppelt ist bzw. sind, über welches die Zylindervolumina außerhalb des Sicherheitsmodus wahlweise mit einem Niederdruckreservoir (13) oder einem Hochdruckreservoir (12) verbunden werden können.

7. Verfahren zum Betrieb eines elektrohydraulischen Bremssystems, insbesondere eines Bremssystems nach einem der Ansprüche 1 bis 6, enthaltend
a) einen mit einem Bremspedal (16) gekoppelten Pedalzylinder (1),
b) einen mit Bremseinrichtungen (17) gekoppelten Bremszylinder (2),
wobei beim Übergang in einen Sicherheitsmodus ein Hydraulikpfad (13) mit einer direkten Verbindung zwischen Pedalzylinder (1) und Bremszylinder (2) hergestellt wird, **dadurch gekennzeichnet, dass** im Sicherheitsmodus ein definiertes Volumen an Hydraulikflüssigkeit im Hydraulikpfad (13) hergestellt wird.

8. Verfahren nach Anspruch 7, **dadurch gekennzeichnet, dass** beim Übergang in den Sicherheitsmodus Hydraulikflüssigkeit aus dem Bremszylinder (2) abgesaugt wird, bis dessen Kolben seine Ruhestellung erreicht hat.

9. Verfahren nach Anspruch 7 oder 8, **dadurch gekennzeichnet, dass** dem Hydraulikpfad (13) Hydraulikflüssigkeit zugeführt wird, wenn dort ein vorgegebener Druck unterschritten wird.

10. Verfahren nach einem der Ansprüche 7 bis 9, **dadurch gekennzeichnet, dass** Pedalzylinder (1) und/oder Bremszylinder (2) außerhalb des Sicherheitsmodus über Elektroventile (4, 7) gesteuert mit Hochdruck beziehungsweise Niederdruck beaufschlagt werden.

## Claims

1. Electrohydraulic brake system, containing
a) a pedal cylinder (1) which is coupled to a brake pedal (16),
b) a brake cylinder (2) which is coupled to brake devices (17),
c) at least one valve (3, 6) which is preferably electrically activated and which, in a safety mode, can bring about a hydraulic path (13) with a direct connection between the pedal cylinder (1) and brake cylinder (2),
**characterized in that** the brake system has a balancing device (8, 9, 10, 11) with which, in the safety mode, a defined volume of hydraulic fluid can be brought about in the hydraulic path (13).

2. Electrohydraulic brake system according to Claim 1, **characterized in that** the balancing device contains an additional cylinder (8) with a springloaded piston, the working volume, which expands under spring effect, of the cylinder being capable of being coupled to the hydraulic path (13) in the safety mode by means of a preferably electrically activated valve (9).

3. Brake system according to Claim 2, **characterized in that**, outside the safety mode, the working volume, which is compressed under spring effect, of the additional cylinder (8) can be coupled to a high-pressure reservoir (12) via a preferably electrically activated valve (10).

4. Brake system according to one of Claims 1 to 3, **characterized in that** the hydraulic path (13) is coupled to a low-pressure reservoir (13) via a nonreturn valve (11).

5. Brake system according to one of Claims 1 to 4, **characterized in that** the latter has a low-pressure reservoir (13) to which, in the safety mode, the respective second sides of the pedal cylinder (1), brake cylinder (2) and/or additional cylinder (8) are coupled.

6. Brake system according to one of Claims 1 to 5, **characterized in that** the pedal cylinder (1) and/or the brake cylinder (2) is/are coupled to a preferably electrically activated valve (4, 7) via which, outside the safety mode, the cylinder volumes can be connected optionally to a low-pressure reservoir (13) or to a high-pressure reservoir (12).

7. Method for operating an electrohydraulic brake system, in particular a brake system according to one of Claims 1 to 6, containing
a) a pedal cylinder (1) which is coupled to a brake pedal (16),
b) a brake cylinder (2) which is coupled to brake devices (17),
at the changeover into a safety mode, a hydraulic path (13) being brought about with a direct connection between the pedal cylinder (1) and brake cylinder (2), **characterized in that**, in the safety mode, a defined volume of hydraulic fluid is brought about in the hydraulic path (13).

8. Method according to Claim 7, **characterized in that**, at the changeover into the safety mode, hydraulic fluid is sucked out of the brake cylinder (2) until its piston has reached its home position.

9. Method according to Claim 7 or 8, **characterized in that** hydraulic fluid is fed to the hydraulic path (13) if the pressure there drops below a predefined pressure.

10. Method according to one of Claims 7 to 9, **characterized in that**, outside the safety mode, high pressure or low pressure is applied to the pedal cylinder (1) and/or brake cylinder (2) under the control of electrovalves (4, 7).

## Revendications

1. Système de freinage électro-hydraulique, contenant :
a) un cylindre de pédale (1) accouplé à une pédale de frein (16),
b) un cylindre de frein (2) accouplé à des dispositifs de freinage (17),
c) au moins une soupape (3, 6) à commande électrique, qui peut produire dans un mode de sécurité un chemin hydraulique (13) avec une liaison directe entre le cylindre de pédale (1) et le cylindre de frein (2),
**caractérisé en ce que** le système de freinage présente un dispositif de compensation (8, 9, 10, 11) avec lequel, en mode de sécurité, un volume défini de liquide hydraulique peut être produit dans le chemin hydraulique (13).

2. Système de freinage électro-hydraulique selon la revendication 1, **caractérisé en ce que** le dispositif de compensation contient un cylindre supplémentaire (8) avec un piston sollicité par ressort, le volume de travail du cylindre augmentant sous l'effet du ressort pouvant être accouplé au chemin hydraulique (13) en mode de sécurité par le biais d'une soupape (9) à commande de préférence électrique.

3. Système de freinage selon la revendication 2, **caractérisé en ce que** le volume de travail du cylindre supplémentaire (8) comprimé sous l'effet du ressort peut être accouplé à un réservoir haute pression (12) hors du mode de sécurité par le biais d'une soupape (10) à commande de préférence électrique.

4. Système de freinage selon l'une quelconque des revendications 1 à 3, **caractérisé en ce que** le chemin hydraulique (13) est accouplé par le biais d'une soupape anti-retour (11) à un réservoir basse pression (13).

5. Système de freinage selon l'une quelconque des revendications 1 à 4, **caractérisé en ce qu'**il présente un réservoir basse pression (13) auquel, en mode de sécurité, sont raccordés à chaque fois les deuxièmes côtés du cylindre de pédale (1), du cylindre de frein (2) et/ou du cylindre supplémentaire (8).

6. Système de freinage selon l'une quelconque des revendications 1 à 5, **caractérisé en ce que** le cylindre de pédale (1) et/ou le cylindre de frein (2) sont accouplés à une soupape (4, 7) à commande de préférence électrique, par le biais de laquelle les volumes de cylindre peuvent être connectés en dehors du mode de sécurité de manière sélective à un réservoir basse pression (13) ou à un réservoir haute pression (12).

7. Procédé pour faire fonctionner un système de freinage électro-hydraulique, en particulier un système de freinage selon l'une quelconque des revendications 1 à 6, contenant .
a) un cylindre de pédale (1) accouplé à une pédale de frein (16),
b) un cylindre de frein (2) accouplé à des dispositifs de freinage (17),
dans lequel, à la transition en mode de sécurité, un chemin hydraulique (13) est créé avec une liaison directe entre le cylindre de pédale (1) et le cylindre de frein (2), **caractérisé en ce qu'**en mode de sécurité, un volume défini de liquide hydraulique est produit dans le chemin hydraulique (13).

8. Procédé selon la revendication 7, **caractérisé en ce qu'**à la transition en mode de sécurité, du liquide hydraulique est aspiré hors du cylindre de frein (2), jusqu'à ce que son piston ait atteint sa position de repos.

9. Procédé selon la revendication 7 ou 8, **caractérisé en ce que** l'on achemine au chemin hydraulique (13) du liquide hydraulique lorsque la pression qui y règne est inférieure à une pression prédéterminée.

10. Procédé selon l'une quelconque des revendications 7 à 9, **caractérisé en ce que** le cylindre de pédale (1) et/ou le cylindre de frein (2) sont sollicités avec une haute pression ou une basse pression de manière commandée par le biais de soupapes électriques (4, 7) en dehors du mode de sécurité.
